# FASCICULE DE BREVET EUROPEEN

(11) **EP 3 343 423 B1**
(45) Date de publication et mention de la délivrance du brevet: **20.11.2024**
(21) Numéro de dépôt: 17209239.7
(22) Date de dépôt: 21.12.2017
(51) Int. Cl.: G06F 21/55, H04L 9/40, H04W 12/122, H04W 12/128, H04W 4/60

(54) **SYSTEME DE SECURISATION D'UN RESEAU INFORMATIQUE LOCAL**
SICHERUNGSSYSTEM EINES LOKALEN IT-NETZES
SYSTEM FOR SECURING A LOCAL COMPUTER NETWORK

(30) Priorité: 29.12.2016 FR 1663504
(43) Date de publication de la demande: 04.07.2018
(73) Titulaire: Sylink Technologie, 63730 Mirefleurs (FR)
(72) Inventeur: LEGEAY, David, 63730 Mirefleurs (FR)
(74) Mandataire: IP Trust

(56) Documents cités:
- US-A1- 2014 173 712
- US-B1- 7 610 624
- US-B1- 9 485 262

## Description

### Domaine de l'invention

La présente invention concerne le domaine de la sécurité informatique et plus précisément de la détection d'intrusions malicieuses (virus, cyber-attaques connexions à des adresses IP inhabituelles,) sur un réseau local, l'analyse de l'état fonctionnel du réseau local, et l'envoi automatique d'alertes à un administrateur du réseau local avec des moyens lui permettant de mettre fin à distance aux intrusions malicieuses signalées.

La sécurité d'un réseau informatique d'une entreprise ou d'une organisation présente des enjeux portant, d'une part, sur le droit pénal, par la visite par les utilisateurs de sites illicites, et d'autre part, sur la productivité des utilisateurs faisant partie de ce réseau. Les enjeux portent aussi sur la bande passante du réseau, les risques de virus au sein du réseau, ainsi que sur la confidentialité des informations circulant au sein du réseau.

Parallèlement à ces enjeux, des questions se posent quant au droit social régissant l'accès aux données personnelles d'un utilisateur. Tous ces enjeux ont conduit les acteurs du domaine de la sécurité d'un réseau informatique à développer des outils permettant de mettre en place une politique de sécurité et une gestion de cette politique. Parmi ces outils, on peut par exemple citer les antivirus, les Firewalls, etc. Actuellement, un des outils standard de sécurité en entreprise est le « Firewall » ou mur anti- feu. Celui-ci filtre les accès entrants et sortants et bloque les attaques venant de l'extérieur. Afin de repérer les pirates, certains Firewalls proposent depuis peu des fonctions de détection d'intrusion (IDS : Intrusion Détection System) qui vont être capables de repérer qu'un poste se livre à une tentative d'attaque par un comportement précis (scan d'adresse IP, etc.). Ce Firewall va alors bloquer dynamiquement l'accès à cette machine.

Cependant, les organisations se rendent compte aujourd'hui que les vulnérabilités de sécurité proviennent aussi de l'usage interne, que ce soit par négligence ou par nuisance volontaire. Actuellement, les outils de sécurité interne ne sont pas nombreux et la plupart de ces outils utilisent des règles de sécurité statiques. En outre, ces outils de sécurité interne ne permettent pas d'obtenir une sécurité satisfaisante d'un réseau informatique. Les règles de sécurité statiques ne peuvent pas être optimales et sont soit trop strictes pour un utilisateur donné, soit pas assez strictes. Elles ne permettent pas d'assurer une politique de sécurité propre à chaque utilisateur, qui soit conforme aux réglementations sur la protection des données personnelles (par exemple, la lecture nominative des logs d'utilisation peut être interdite), et qui permette d'assurer des performances satisfaisantes en terme de productivité, de bande passante et de protection contre les attaques extérieures. De plus, ces règles statistiques deviennent peu efficaces lorsqu'on observe un changement au niveau de l'utilisateur.

De plus, l'accroissement massif, dans le monde entier, de l'accès à l'Internet et le développement exponentiel du nombre d'objets connectés installés sur un réseau local a pour effet indésirable de multiplier les actions frauduleuses de capture des informations personnelles des utilisateurs sans leur consentement ("Spyware"), de corruption malveillante des ordinateurs à l'insu de l'utilisateur, et l'utilisation malicieuse de ressources d'un utilisateur, pour détourner la facturation de consommation téléphoniques en voie sur IP par exemple.

Pour des organisations disposant de personnel spécialisé dans la sécurité informatique, l'administration d'un réseau local constitue une tâche complexe, nécessitant une forte expertise et une veille permanente sur les nouveaux modes d'attaque, et une administration technique très complexe.

Pour des organisations de plus petites tailles, telles que des petits et moyennes entreprises voire des particuliers, associations ou artisans, il n'est pas possible de disposer d'une expertise suffisante, et la seule solution consiste à installer des applications plus ou moins efficaces pour limiter les risques, sans qu'il ne soit possible de vérifier objectivement et de manière approfondie si le réseau est soumis ou non à des attaques.

### Etat de la technique

On connaît par exemple dans l'état de la technique une solution d'analyse de sécurité de réseau décrite dans la demande de brevet internationale WO2016172055. Ce document de l'art antérieur décrit un procédé et un système de détection de comportement malveillant en provenance d'agents intelligents à l'intérieur d'un réseau.

Des données de trafic de réseau et des données d'identification d'appareil sont collectées par les agents intelligents au sein d'un réseau. Ces données sont envoyées à un moteur d'analyse externe, exécuté par un serveur distant, qui calcule des niveaux de confiance pour des anomalies dans le trafic du réseau susceptibles de provenir d'un comportement malveillant. Si le moteur d'analyse de comportement détermine qu'un comportement malveillant est actif dans le réseau, il envoie une instruction à un concentrateur de trafic de réseau pour bloquer le trafic de réseau se rapportant à l'anomalie. Dans certains modes de réalisation, le trafic réseau est bloqué en se basant sur des paires source-destination. Dans certains modes de réalisation, le trafic de réseau est bloqué depuis un dispositif à l'extérieur du réseau qui est déterminé comme étant malveillant.

La demande de brevet US2011219448 décrit une méthode de notation du risque et de détection d'intrusions malveillantes. Elle comprend un module d'extraction, un moteur d'analyse, et un module de filtre. Le module d'extraction est configuré pour extraire un fichier SWF à partir d'une page Web téléchargée par le système. Le moteur d'analyse communique avec le module d'extraction. Le moteur d'analyse est configuré pour déterminer un niveau de risque pour le fichier SWF et envoyer la note de risque pour une application Web pour l'affichage. Dans un exemple, la détermination de la notation du risque comprend la localisation d'une redirection URL intégrée et la détermination d'une évaluation des risques pour la redirection URL intégrée. Le module de filtrage est configuré pour déterminer, sur la base de l'évaluation du risque, que ce soit pour bloquer le fichier SWF et envoyer un avertissement à l'application Web pour l'affichage.

On connaît aussi le brevet américain US9485262B1 décrivant nn dispositif pouvant recevoir des informations qui identifient une signature d'attaque pour détecter une intrusion. Ce dispositif peut déterminer une configuration de dispositif vulnérable à l'intrusion, un dispositif d'extrémité associé à la configuration de dispositif et une période de temps pendant laquelle le dispositif d'extrémité a été associé à la configuration de dispositif. Ce dispositif peut appliquer la signature d'attaque aux informations de trafic réseau, et peut déterminer si le dispositif d'extrémité a été soumis à l'intrusion pendant la période de temps sur la base de l'application de la signature d'attaque aux informations de trafic réseau. Le dispositif peut effectuer sélectivement une action en fonction de la détermination si le dispositif de point d'extrémité a été soumis à l'intrusion.

La demande de brevet US2014173712 décrit un procédé comprenant les étapes consistant à :
- recevoir, par un dispositif de sécurité, un flux de trafic pour l'utilisation d'un service ;
- recevoir, par un ou plusieurs dispositifs fournisseurs de services, le flux de trafic ;
- obtenir, par un dispositif d'analyse, des journaux du dispositif de sécurité et du ou des dispositifs de fourniture de services, les journaux comprenant des informations relatives à l'activité de flux de trafic au niveau d'une couche d'application associée au service ;
- stocker, par le dispositif d'analyse, des règles qui identifient un comportement allant de non intentionnel à intentionnel pour une ou plusieurs couches de communication, y compris une couche d'application ;
- interpréter, par le dispositif d'analyse, les journaux en fonction d'une ou plusieurs des règles ;
- déterminer, par le dispositif d'analyse, si une violation existe sur la base de l'interprétation ; et
- générer une notification en réponse à la détermination de l'existence de la violation.

On connaît enfin le brevet US7610624 décrivant un système de protection d'un réseau informatique, le système comprenant au moins un dispositif informatique, le au moins un dispositif informatique ayant un ou plusieurs modules, comprenant un module de détection configuré pour :
- surveiller un ou plusieurs paquets reçus d'un dispositif source pour déterminer si un ou plusieurs des paquets reçus comprennent une ou plusieurs signatures de code informatique nuisibles, et surveiller en outre les paquets reçus pour déterminer si un ou plusieurs des paquets reçus comprennent des informations d'identification qui a un historique d'inclusion dans des paquets associés à une ou plusieurs attaques précédentes dirigées contre un dispositif cible couplé au réseau ; et
- détecter une attaque dirigée contre le dispositif cible si un ou plusieurs des paquets surveillés comprennent une ou plusieurs des signatures de code informatique nuisibles, et détecter en outre l'attaque si un ou plusieurs des paquets surveillés comprennent les informations d'identification qui ont l'historique de être inclus dans les paquets associés aux attaques précédentes dirigées contre le dispositif cible.

Un module d'analyse est configuré pour déterminer une gravité de l'attaque détectée dirigée contre le dispositif cible. Un module de création de journal configuré pour créer un profil d'attaque basé sur des informations associées à l'attaque détectée, dans lequel le profil d'attaque fournit des informations d'identification incluses dans les paquets surveillés qui incluent les signatures de code informatique nuisibles, et dans lequel le profil d'attaque fournit en outre les informations d'identification qui a l'historique d'être inclus dans les paquets associés aux attaques précédentes dirigées contre le périphérique cible. Un module de blocage configuré pour :
- bloquer un ou plusieurs des paquets surveillés d'être transmis au dispositif cible, dans lequel les paquets bloqués incluent les informations d'identification fournies dans le profil d'attaque, et dans lequel le module de blocage est en outre configuré pour désactiver un canal de communication connectant le dispositif source à la cible dispositif pour empêcher la transmission des paquets au dispositif cible ;
- empêcher qu'un ou plusieurs paquets reçus ultérieurement soient transmis au dispositif cible si la gravité de l'attaque détectée dépasse un seuil prédéterminé, les paquets ultérieurement bloqués comprenant des paquets provenant du dispositif source et des paquets dirigés vers le dispositif cible ;avertir un utilisateur si le dispositif source provient en interne d'un périmètre défini du dispositif cible, l'utilisateur étant averti que le canal de communication a été désactivé et que l'attaque est originaire du périmètre défini du dispositif cible et activer le canal de communication pour au moins un système qui exécute une application valide sur le canal de communication si le périphérique source provient de l'extérieur du périmètre défini du périphérique cible.

### Inconvénients de l'art antérieur

Les solutions de l'art antérieur ne sont pas totalement satisfaisantes car elles provoquent le blocage automatique du port non conforme détecté par analyse des comportements frauduleux. Cela peut perturber gravement le fonctionnement du réseau local.

Par ailleurs, l'administration est réalisée par une application logicielle, généralement exécutée sur l'un des postes informatiques installé sur le réseau.

Enfin, l'utilisation des solutions de l'art antérieur nécessite une expertise technique significative, dépassant les compétences rencontrées dans une majorité de petites et moyennes entreprises.

### Solution apportée par l'invention

Afin de remédier à ces inconvénients, la présente invention concerne selon son acception la plus générale un système de sécurisation d'un réseau informatique local, présentant les caractéristiques techniques énoncés dans la revendication 1 et optionnellement dans les revendications dépendantes.

### Description détaillée d'un exemple non limitatif de l'invention

La présente invention sera mieux comprise à la lecture de la description détaillée concernant un exemple non limitatif de réalisation, se référant aux dessins annexés où :

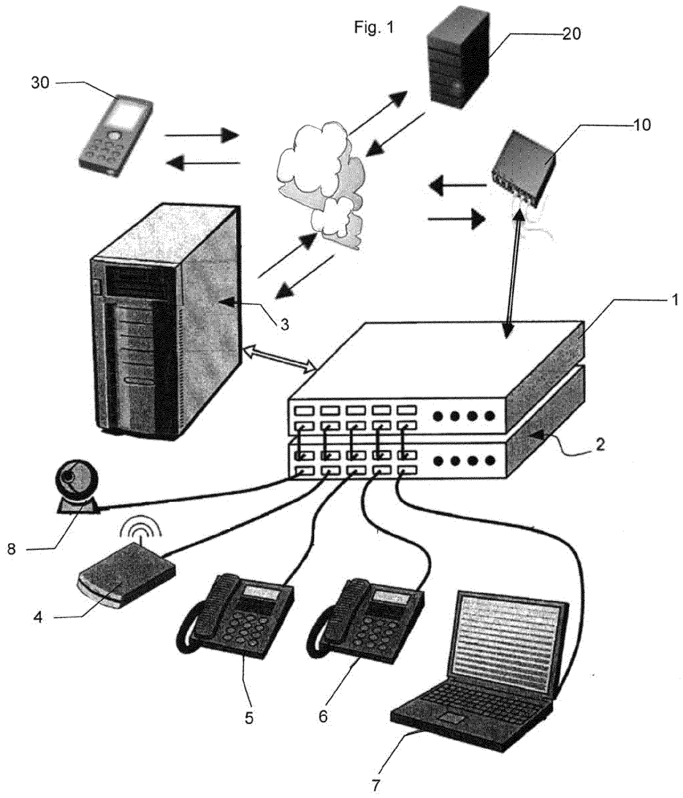

- la figure 1 représente une vue schématique d'un exemple de réalisation d'un système selon l'invention
- la figure 2 représente une vue schématique d'un boîtier de supervision selon l'invention
- la figure 3 représente un exemple d'interface graphique visualisée sur l'afficheur du boîtier de supervision.

La description qui suit correspond à un exemple non limitatif de réalisation d'un boîtier de supervision conforme à l'invention, permettant la supervision de la sécurité d'un petit réseau local simple et facile d'utilisation, sans nécessiter d'expertise technique particulière.

Avec la multiplication des objets connectés et autres ; branchés sur la Box Internet (PC, mobile, tablette, balance, TV, console, alarme, etc....), il devient difficile pour une personne, non issue de l'informatique, de mettre en place un minimum de protection pour l'ensemble de ses informations.

Le système décrit se décompose en trois parties :
- un boîtier de supervision (10) installé sur le réseau local à superviser, exécutant une application logicielle et présentant des interfaces hommes-machines et des moyens de communication
- un serveur (20)
- une application mobile destinée à être exécutée par un équipement informatique mobile (30) d'une ou de plusieurs personnes habilitées à assurer la supervision du réseau local.

### Vue schématique du système

Le système objet de l'invention est destiné à la supervision d'un réseau local comprenant de manière connue un commutateur (1) relié d'une part à un répéteur (2) et d'autre part à un serveur (3) de réseau local, lequel est par ailleurs relié à Internet. Le réseau comporte des équipements connectés via des lignes Ethernet ou par des liaisons radiofréquences (WIFI, ....) par exemple un répéteur WIFI (4), des téléphones VoIP (5, 6), des ordinateurs fixes ou mobiles (7), des objets connectés tels qu'une caméra (8).

Le système de supervision selon l'invention est constitué par un boîtier de supervision (10) qui sera décrit plus en détail dans ce qui suit, communicant via le réseau Internet avec le serveur (20), et une application exécutée sur un téléphone cellulaire ou une tablette (30) communiquant également avec le boîtier de supervision (10) et le serveur (20) par le réseau internet.

Le téléphone (30) a pour but de récupérer des informations provenant du boîtier de supervision (10) via le serveur (20). Il permet également de configurer un boîtier de supervision (10) et d'effectuer certaines actions sur le boîtier de supervision (10).

Le serveur (20) est chargé de l'analyse des différentes informations transmise par le boîtier de supervision (10). Il assure également la liaison entre les téléphones (30) des superviseurs habilités et les le boîtier de supervision (10). Le boîtier de supervision (10) est chargé d'effectuer des actions sur le réseau domestique.

Pour la supervision du réseau local, les différents composants du système assurent les fonctions suivantes :
a) Les téléphones mobiles (30) exécutant l'application dédiée envoient des requêtes au serveur (20), et reçoivent :
   - les données du serveur (20)
   - des notifications ou des SMS d'alertes via les serveurs SMS et le centre de notification commandés par le serveur (20)
b) le serveur (20) traite les requêtes provenant de téléphone (30) et du site terminal (back-end) et envoie des commandes au boîtier de supervision (10). Le serveur (20) crée également des alertes quand celles-ci sont détectées et envoie les notifications aux bons serveurs « d'alertes » suivant le choix de l'utilisateur.
c) les boîtiers de supervision (10) reçoivent des commandes du serveur (20) et effectue des actions et renvoie des données au serveur. Ils récupèrent par ailleurs en temps réel les différentes informations du réseau local et les transmettent au serveur (20).

### Description de l'architecture matérielle d'un boîtier de supervision (10)

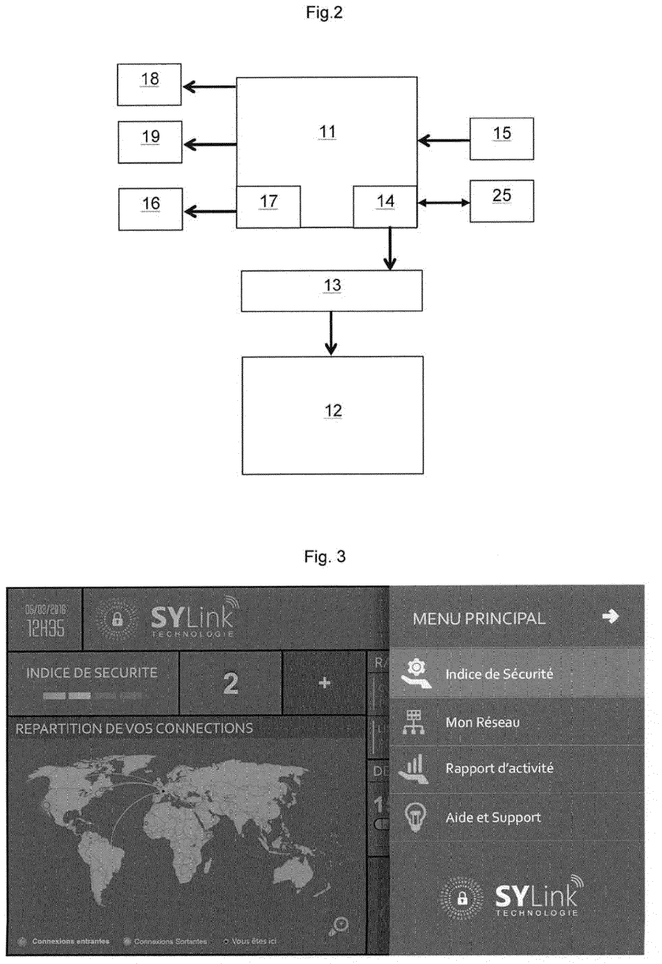

Le boîtier de supervision (10) installé sur le réseau local analyse les paquets de données et communique avec le serveur (20). La figure 2 représente le schéma de principe d'un tel boîtier de supervision.

Il est piloté par un calculateur (11) interface avec un écran de visualisation (12) par l'intermédiaire d'une carte interface (13). Le contrôle est réalisé via le port HDMI (14) du calculateur (11). La carte interface (13) possède en entrée un connecteur HDMI ainsi qu'un connecteur *µ*USB 5V/1A et en sortie un connecteur ZIF 50 points/0.5mm (data) et un connecteur ZIF 30 points/0.5mm.

Un capteur d'inclinaison (15) transmet au calculateur (11) une information relative au positionnement physique du boîtier de supervision (10) et notamment pour déterminer si le boîtier de supervision est fixé sur un mur (inclinaison verticale) ou posé sur un meuble (inclinaison horizontale). Ce capteur (15) se connecte directement au calculateur (11) et délivre une tension proportionnelle à l'inclinaison.

Un adaptateur audio USB (16)permet d'émettre du son dans des écouteurs ou un haut-parleur. Cet adaptateur (16) se connecte directement au calculateur (11) sur un des ports USB (17).

Le boîtier de supervision (10) comporte également une interface Bluetooth (25).

Le boîtier de supervision (10) comporte également deux Leds RGB (18, 19) pilotés par le calculateur (11).

### Fonctionnement du système selon l'invention

La description qui suit présente l'architecture fonctionnelle du système, et les différentes fonctions réalisées par les trois sous-ensembles formés par le boîtier (10), le serveur (20) et l'application exécutée sur un terminal mobile (30).

### Appairage entre un boîtier (10) et un terminal (30) et configuration initiale du boîtier (10).

La première fonction concerne la configuration du boîtier (10) pour son utilisation sur un réseau local spécifique, et la supervision par un ou plusieurs terminaux mobiles (30) détenus par des utilisateurs habilités par le propriétaire du réseau local.

L'étape de configuration peut être commandée manuellement par le lancement d'un programme applicatif exécuté par le calculateur (11) du boîtier, à l'aide d'un bouton dédié ou d'une action sur une interface tactile.

Elle peut aussi être commandée par le scan d'un code matriciel, par exemple un QRCode, avec un terminal mobile (30). Cette action ouvre une session de communication entre le terminal mobile (30) et le serveur (20) ou un serveur associé, vers une adresse IP inscrite dans le code matriciel. Cette opération entraîne le téléchargement sur le terminal mobile (30) connecté au serveur d'un code informatique qui est installé sur le terminal mobile (30).

L'exécution de ce code informatique commande la lecture d'un deuxième QR Code qui contient les informations d'identification du boîtier (10).

Ce code contient l'identifiant de la box : 8 chiffres, 2 lettres en capital et un caractère spécifique. Il contient également les informations pour connecter le boîtier (10) en Bluetooth au terminal mobile (30).

Une fois que le boîtier (10) et le terminal mobile (30) sont connectés en Bluetooth, on procède à une étape de recherche et de test de connexion.

L'étape de configuration comporte aussi des opérations d'enregistrement de l'adresse mail et le téléphone à associer et le choix d'un mode d'alerte et d'un code de sécurité à affecter. Ces informations sont enregistrées localement dans une mémoire tampon transitoire, puis transmises sous forme chiffrée en MD5 vers une base de données locale, synchronisée avec une base de données du serveur (20).

### Recherche et de test de connexion à un réseau

Cette étape consiste à intégrer la boîte de supervision (10) au réseau local (Wifi ou RJ25, ou encore en liaison Ethernet avec la box d'un fournisseur d'accès Internet) et à affecter sa clé de sécurité. La boîte de supervision (10) est connectée au réseau, et on lance le scan du réseau (Wifi ou RJ45).

### Analyse du réseau

Le boîtier de supervision (10) procède en permanence ou périodiquement à des captations de données qui sont enregistrées transitoirement dans une mémoire tampon locale et transmises au serveur (20) sous forme de métadonnées horodatées, correspondant aux trames identifiées pendant un intervalle de temps identifié par un marqueur, et à l'équipement associé également identifié par un marqueur. Ces métadonnées sont ensuite traitées par le serveur (20), pour générer les alertes et informations pertinentes. Cette organisation permet d'actualiser en permanence les traitements sur le serveur commun à un grand nombre de boîtiers de supervision (10).

La survenance de nouveaux types d'attaques ne nécessite aucune intervention sur les boîtiers de supervision (10), les utilisateurs disposant toujours des dernières versions.

Le calculateur (10) exécute des programmes correspondant à trois types traitements :
TEST : il s'agit d'un test de connexion du réseau, et des tests sur la bande passante et les débits disponibles, max et restant sur la boîte de supervision (10). Cette analyse est réalisée en tache de fond régulièrement.
SCAN : Il s'agit d'un scan du réseau, consistant à récupérer la liste des périphériques et des informations sur ceux-ci. L'objectif est de disposer d'une représentation de la structure du réseau qui est transmise au serveur (20) pour procéder aux analyses d'intrusions et fournir les informations de supervision aux terminaux mobiles (30).
ANALYSER : on récupère des logs et des informations sur les différents périphériques et notamment les différents sites visités. L'objectif est de les transmettre au serveur (20).

Les traitements appliqués concernent le balayage de ports, connu également dans l'état de la technique sous le terme anglais « Port Scan », qui est une technique permettant de déterminer, pour un ensemble donné d'adresses IP, lesquelles correspondent à des terminaux existants, ainsi que des informations relatives à ces terminaux à partir d'un terminal distant via le réseau.

Ces informations peuvent comprendre notamment la version du système d'exploitation utilisé sur chacun des terminaux ciblés, les noms et les versions des différents services offerts par ces terminaux ainsi que l'ensemble de ports ouverts et fermés pour ces terminaux.

Le balayage de ports consiste généralement à envoyer vers chaque port des terminaux ciblés, un flux de données et à analyser ensuite les flux reçus en réponse aux flux envoyés ou l'absence de telles réponses. En particulier, lors de cette analyse, les ports ayant rejeté ou ignoré la connexion initiée sont considérés comme fermés. Les ports ayant confirmé la connexion initiée, sont alors considérés comme ouverts.

Le balayage de ports est utilisé par exemple par les administrateurs du réseau afin de contrôler sa sécurité mais aussi par les pirates informatiques afin de préparer une attaque informatique sur au moins certains des terminaux du réseau. Dans ce dernier cas, il s'agit d'un balayage de ports non-autorisé.

Le balayage de ports non-autorisé est ainsi largement utilisé par les pirates informatiques pour préparer une attaque informatique via l'un ou plusieurs ports ouverts déterminés lors de ce balayage.

La détection de balayage de ports non-autorisé constitue donc un problème technique important dans la lutte contre la piraterie informatique.

Le boîtier de supervision (10) détecte des balayages de ports dans le réseau de manière centralisée. A cet effet, il analyse l'ensemble de connexions initiées par un même terminal et identifié par son adresse IP, vers un grand nombre de terminaux et/ou de ports dans le réseau privé.

Ainsi, par exemple, lorsque le nombre de ces connexions dépasse un seuil prédéterminé, le serveur (20) déclenche une alerte transmise au terminal (30) pour avertir les administrateurs du réseau d'un éventuel balayage de ports.

Trois analyses différentes du réseau sont réalisées à intervalles réguliers et une tache en temps réel.

Toutes les N minutes, le boîtier de supervision (10) commande l'exécution d'un test du réseau, enregistre les différentes informations sur les débits et la bande passante et optionnellement les transmet au serveur (20). N est par exemple compris entre 10 secondes et 10 minutes.

Toutes les M minutes, le boîtier de supervision (10) commande l'exécution d'un scan du réseau, et enregistre les informations sur les périphériques du réseau et optionnellement les transmet au serveur (20). N est par exemple compris entre 1 minute et 1 heure.

Toutes les X heures le boîtier de supervision (10) commande l'exécution d'une analyse du réseau, et enregistre les informations sur les visites des différents périphériques, les éventuelles failles de sécurités et les transmet au serveur (20).

En temps réel, le boîtier de supervision (10) commande l'exécution d'une analyse du réseau et récupère les informations sur les visites des différents périphériques (log ou bdd).

Lors des trois différentes actions faites sur le réseau, le boîtier de supervision (10) met en oeuvre différentes méthodes pour pouvoir recueillir des informations :
Le scan permet de connaître le schéma du réseau et avoir les périphériques sur celui-ci et de connaître la liste des appareils connectés par ceux-ci. Cette fonction est réalisée par un logiciel de détection des ports ouverts, d'identification des services hébergés et de lecture des informations sur le système d'exploitation.

Une écoute du réseau (Sniffer en anglais) permet de récupérer des informations passant dans ce réseau.

On pourra alors connaître les différents débits circulant sur le réseau et récupérer d'autres informations et log passant dans les réseaux, y compris Bluetooth, tel que l'historique des visites. Ceci peut être fait avec un logiciel analyseur de paquets libres utilisé dans le dépannage et l'analyse de réseaux informatiques, comme Wireshark (nom commercial).

Le boîtier de supervision (10) commande aussi le recueil d'autres informations et log sur les différents équipements présents sur le réseau local. Pour cela on peut utiliser un logiciel fournissant des informations sur les vulnérabilités de systèmes informatiques, comme Metasploit (nom commercial) qui permet d'envoyer des requêtes sur une machine et récupérer certaines informations pour les transmettre au serveur (20).

Le serveur (20) enregistre les données provenant des boîtiers de supervision (10) dans différentes tables :
Table Box : Table(s) contenant les informations sur les boîtiers de supervision (10) équipant différents réseaux locaux.
Table Réseaux : Table(s) contenant les informations sur les réseaux liés au boîtier de supervision (10).
Table Alertes : Table(s) contenant les alertes émises sur le réseau surveillé par le boîtier de supervision (10).
Table Périphériques : Table(s) contenant les informations sur les différents périphériques qui se sont connectés aux réseaux gérer par les boîtiers de supervision (10).
Table URLs : Table(s) contenant les domaines (url) sur les différents périphériques qui se sont connectés et sniffés (source <-> destination).
Table Modes Sécurité : Table(s) Contenant les différentes modes de sécurité et les informations sur ceux-ci.
Table Planning Sécurités : Tables contenant les différents plannings de sécurité émise. Stocké par Jour de la semaine et Heure, ainsi que le mode de sécurité associé et s'il s'agit d'un périphérique ou du réseaux global.
Table Aides : Table contenant les différentes pages d'aide pouvant assister les utilisateurs
Table DIs : Table contenant les différentes demandes faites par les utilisateurs.
Table Schémas réseau : Table contenant les différents schémas des réseaux.
Table Informations réseau : Tables qui stockent les différentes informations récupérées par les outils et qui les envoie à la fin du traitement pour analyse.

### Web services

Les différents web services existant entre le serveur et les boîtiers de supervision (10) commande l'exécution des actions depuis le serveur (20) et la remontée des informations depuis les boîtiers de supervision (10).

Authentification : Permet à l'utilisateur de s'authentifier auprès du serveur pour utiliser l'application.

Get_QRCode : Envoie le QR Code et l'identifiant de la box au serveur lors de son activation.

Get_CodeSecurite : Envoie le code pin de sécurité pour sauvegarde sur le serveur.

Set_CodeSecurite : Modifie le code pin sur le serveur (20).

Get_Debits : Envoyer les informations sur les débits pour l'affichage.

Lancer_TestDebits : Lancer la commande pour les tests des débits sur le réseau.

Get_Appareils : Envoyer les informations sur la liste des périphériques.

Lancer_TestConnexionAppareils : Lancer le test de scan du réseau pour récupérer les informations sur les périphériques

Get_ModeSecurite : Récupérer les informations sur les modes de sécurité.

Set_ModeSecurite : Modifier le mode de sécurité.

Lancer_ScanDuReseau : Lancer le test de scan du réseau pour récupérer les informations

### Commande de l'interface du boîtier de supervision

Le boîtier de supervision (10) comporte un afficheur permettant de présenter de manière ergonomique des indicateurs représentatif du niveau de sécurité du réseau local.

A cet effet, le calculateur (11) exécute un code informatique calculant une représentation graphique sous forme de carte géographique sous forme de plan (map en anglais) ou de globe (sphère) montrant un historique (en anglais timeline) des connexions entrantes et sortantes sur les réseaux.

Cette représentation graphique dont la figure 3 représente un exemple comporte aussi des lignes représentant les connexions entrantes du point d'origine jusqu'au coordonnées du l'IP du domicile et inverse pour les connexions sortantes. Ces informations proviennent du serveur (20).

Les flux provenant de catégorie interdite sont représentés avec une couleur différente, de même que les pays interdits (ceux-ci apparaissent d'une couleur différente sur la carte).

Les différents flux de connexion sont calculés grâce aux données envoyées au serveur (20) par les analyses faites par le boîtier de supervision (10) qui « sniffe » les connections, envoie le résultat de ce traitement sur serveur (20) pour traitement, ce dernier envoie des données traitées sur le boîtier de supervision (10).

Les interfaces graphiques représentent également des informations graphiques ou chiffrées représentatives de l'indice de sécurité, par exemple sous forme de score de 1 à 4 selon les informations calculées sur le serveur.

Le serveur exécute des traitements tels que :
- DeepLearning (apprentissage des habitudes)
- DeepLearning pour centraliser un ZeroDay sur 1 box, pour l'ensemble des boîtiers de supervision.

Par défaut, le boîtier de supervision affiche des informations en fonction des données provenant du serveur, telles qu'un indice de sécurité, sous forme graphique (par exemple des barres lumineuses) et/ou chiffré (par exemple un chiffre compris entre 0 et 4) représentatif des discordances calculées par le serveur. L'afficheur présente également une information graphique et chiffrée correspondant au débit internet local et/ou de la qualité du réseau d'accès à l'internet.

L'indicateur de qualité du débit internet peut être calculé par un procédé de mesure de la qualité d'un service du protocole Internet à partir d'un robot de mesure exécuté par le boîtier (10), connecté à un premier réseau IP servant de référentiel vers un le serveur (20) constituant l'hôte dudit service et connecté à un deuxième réseau IP avec lequel le premier réseau IP est apte à entrer en communication. Le robot de mesures exécutées par le boîtier (10) et le serveur (20) communique avec l'un avec l'autre sous forme de paquets dirigés par des routeurs appartenant aux réseaux IP et possédant chacun un paramètre de parcours modifiable. Le procédé consiste à :
(a) commander l'émission par le robot de mesures d'un flux de données conformément à un protocole utilisé par le service mesuré, ce flux de données comportant des paquets possédant chacun un paramètre de parcours initial (TTL), et la mémorisation du paramètre de parcours initial en association avec chaque paquet émis,
(b) au niveau de chaque routeur rencontré par un paquet ou au niveau de l'équipement cible, modification inconditionnelle du paramètre de parcours,
(c) en fonction de la valeur du paramètre de parcours, commander le renvoi sélectif par le routeur ou par le serveur (20) vers le robot de mesures d'un paquet contenant une identification du paquet émis correspondant, et
(d) procéder au calcul par le robot de mesures, à partir des valeurs des paramètres de parcours de paquets émis et des paramètres de parcours de paquets renvoyés en correspondance avec les paquets émis, d'un indice de qualité de service.

L'afficheur visualise également le nombre d'équipements locaux connectés et le nombre d'équipements locaux déconnectés, pour permettre une vérification rapide de l'état du réseau local.

Ces informations peuvent être répétées sur l'écran d'affichage d'une tablette ou d'un téléphone exécutant l'application mobile.

Lors du démarrage, l'affichage du boîtier de supervision (10) présente des fonctions de sélection d'un réseau local, de saisie du mot de passe, pour assurer la connexion sur le réseau local à superviser.

Un écran de configuration permet la saisie d'un mot de passe et des informations relatives au mode de notification sur un équipement mobile.

Après ce démarrage, le boîtier de supervision (10) commande la recherche des périphériques connectés sur le réseau et l'association entre le boîtier, le serveur et les équipements mobiles autorisés.

L'appariement entre un équipement mobile et le boîtier se fait par exemple par la saisie depuis la caméra de l'équipement mobile d'un QRcode visualisé sur l'écran du boîtier (10).

En cas de détection par le serveur (20) d'une menace affectant la sécurité, il transmet au boîtier de supervision (10) et les équipements mobiles (30) associés un message indiquant la nature de la menace et le périphérique concerné, ainsi qu'une recommandation textuelle concernant les actions à engager et le cas échéant un lien permettant de commander une séquence d'actions par une simple action tactile ou de pointage de ce lien.

Cette action consiste par exemple à modifier, pour le périphérique associé au message envoyé par le serveur, la table IP TABLE.

Lorsque la menace n'est plus d'actualité, le serveur d'analyse (20) transmet un nouveau message permettant de réactiver les paramètres initiaux du périphérique déconnecté, par exemple par un lien dont l'activation commande une fonction de type « iptables-restore » qui permettent de restaurer une configuration IpTables initialement sauvegardée, lors de l'initialisation du boîtier (10) par une commande « iptables-save ».

## Revendications

1. - Système de sécurisation d'un réseau informatique local, *comprenant un moyen d'analyse de flux implanté sur ledit réseau informatique local et un moyen pour commander une action* à *entreprendre en cas de détection d'intrusion, comprenant l'envoi d'un message concernant l'intrusion détectée* à *un administrateur et pour bloquer, restreindre, et*/*ou détourner le trafic réseau,* **caractérisé en ce qu'**il comprend :
- un boîtier de supervision (10),
- un serveur d'analyse (20) communicant via le réseau Internet avec une pluralité de boîtiers de supervision comprenant ledit boîtier de supervision (10), et
- -une application exécutée sur un terminal (30) constitué par un téléphone cellulaire ou une tablette (30) communiquant avec le boîtier de supervision (10) et le serveur (20) par le réseau internet,
- ledit boîtier de supervision (10) et ledit terminal (30) associés audit réseau local étant appariés
- ledit boîtier de supervision (10) étant installé sur le réseau local à superviser et exécutant une application logicielle pour :
▪ extraire des données numériques des paquets de données circulant sur ledit réseau local,
▪ procéder à un prétraitement et
▪ transmettre à un serveur des métadonnées horodatées associant les données numériques à un identifiant d'un dispositif supervisé concerné parmi les dispositifs supervisés sur le réseau local,
- ledit serveur (20) procédant à l'analyse des métadonnées transmises par ledit boîtier de supervision (10) et exécutant une application logicielle pour l'analyse des métadonnées et l'activation d'alertes
- ladite application mobile exécutée par ledit équipement informatique mobile (30) d'une ou de plusieurs personnes habilitées à assurer la supervision du réseau local, pour :
- communiquer avec ledit serveur (20) et avec le boîtier de supervision (10) pour recevoir lesdites alertes
- présenter des moyens de désactivation de certaines ressources informatiques installées sur ledit réseau local,
- lesdits moyens de désactivation étant constitués par l'envoi à un desdits dispositifs supervisés d'un message commandant la modification de la table IP TABLE, ledit dispositif supervisé comportant une mémoire non volatile pour l'enregistrement de l'état de la table IP TABLE lors du démarrage du dispositif.

2. - Procédé de sécurisation d'un réseau informatique local comprenant un système de sécurisation selon la revendication 1 **caractérisé en ce qu'**il comporte :
- une étape initiale d'appairage d'un boîtier de supervision (10) avec un terminal mobile (30) et de configuration et dudit boîtier de supervision (10) consistant à intégrer la boîte de supervision (10) au réseau local, à sauvegarder une configuration IpTables initiale et à lancer un scan dudit réseau local
- une étape de captation en permanence ou périodiquement de données qui sont enregistrées transitoirement dans une mémoire tampon locale du boîtier de supervisation (10) et transmises à un serveur d'analyse (20) communicant via le réseau Internet avec une pluralité de boîtiers d'analyse (10), lesdites données étant sous forme de métadonnées horodatées, correspondant aux trames identifiées pendant un intervalle de temps identifié par un marqueur, et à l'équipement associé également identifié par un marqueur
- une étape de traitement par ledit serveur d'analyse (20) pour générer des alertes
- et en cas de détection par ledit serveur (20) d'une menace affectant la sécurité, la transmission au boîtier de supervision (10) et à l'équipement mobile (30) associé un message indiquant la nature de la menace et le dispositif supervisé concerné, ainsi qu'une recommandation textuelle concernant les actions à engager, ladite action à engager consistant à modifier, pour le dispositif supervisé associé au message envoyé par ledit serveur d'analyse (20), la table IP TABLE.

3. - Procédé de sécurisation d'un réseau informatique local selon la revendication 2 **caractérisé en ce qu'**il comporte en outre des étapes de transmission par ledit serveur d'analyse (20) d'un nouveau message comportant un lien dont l'activation commande une fonction de type « iptables-restore » qui permettent de restaurer ladite configuration IpTables initialement sauvegardée.

4. - Procédé de sécurisation d'un réseau informatique local selon la revendication 2 **caractérisé en ce que** ledit boîtier de supervision (10) commande En temps réel, l'exécution d'une analyse du réseau et récupère les informations sur les visites des différents dispositifs supervisés.

5. - Procédé de sécurisation d'un réseau informatique local selon la revendication 2 **caractérisé en ce que** le calculateur dudit boîtier de supervision (10) exécute des programmes correspondant à trois types traitements :
A) un test de connexion du réseau, et des tests sur la bande passante et les débits disponibles, max et restant sur la boîte de supervision (10)
B) Un scan du réseau, consistant à récupérer la liste des périphériques et des informations sur ceux-ci pour disposer d'une représentation de la structure du réseau qui est transmise audit serveur (20) pour procéder aux analyses d'intrusions et fournir les informations de supervision aux terminaux mobiles (30)
C) Une récupération des logs et des informations sur les différents dipositifs supervisés et notamment les différents sites visités et de transmission de ces informations audit serveur (20).

6. - Serveur de sécurisation d'un réseau informatique local pour un système conforme à la revendication 1, **caractérisé en ce qu'**il comprend des moyens pour l'analyse des métadonnées transmises par une pluralité de boîtiers de supervision (10) installés chacun sur un réseau local, ledit serveur (20) étant commandé par un code informatique commandant l'analyse desdites métadonnées et en cas de détection d'une menace affectant la sécurité, la transmission au boîtier de supervision (10) et aux équipements mobiles (30) associés un message indiquant la nature de la menace et le dispositif supervisé concerné, ainsi qu'une recommandation textuelle concernant les actions à engager, une desdites action à engager consistant à modifier, pour le dispositif supervisé associé au message envoyé par ledit serveur d'analyse (20), la table IP TABLE.

7. - Boîtier de supervision (10) pour un système conforme à la revendication 1, **caractérisé en ce qu'**il comprend un moyen de communication avec un serveur d'analyse (20) distant communicant via le réseau Internet avec une pluralité de boîtiers d'analyse (10), ledit boîtier de supervision (10) étant apte à l'appairage avec un terminal (30) et à exécuter, lorsqu'il est installé sur un réseau local, une application logicielle pour :
▪ Enregistrer dans une mémoire non volatile l'état de la table IP TABLE lors du démarrage d'un dispositif supervisé
▪ extraire des données numériques des paquets de données circulant sur ledit réseau local,
▪ transmettre à un serveur des métadonnées horodatées associant les données numériques à un identifiant du dispositif supervisé concerné sur le réseau local,
▪ appliquer une commande de désactivation en réponse à un message commandant la modification de la table IP TABLE.

8. - Boîtier de supervision, selon la revendication 7 **caractérisé en ce que** ledit boîtier de supervision (10) comportant en outre des moyens d'affichage des informations provenant d'un serveur et des moyens de désactivation spécifique du dispositif supervisé associé à une discordance, pour la totalité de ses portes de communication.

9. - Boîtier de supervision, selon la revendication 7 **caractérisé en ce qu'**il comporte en outre une autre interface entrée sortie de type radiofréquence.

10. - Boîtier de supervision, selon la revendication 7 **caractérisé en ce que** ledit boîtier comporte en outre un moyen d'affichage d'informations de l'état fonctionnel du réseau et des communications.

11. - Boîtier de supervision, selon la revendication 7 **caractérisé en ce qu'**il comporte des moyens d'activation ou de désactivation d'un périphérique présent sur le réseau local par une action sur un lien calculé par le serveur et visualisé sur l'afficheur dudit boîtier ou d'un équipement mobile associé.

## Patentansprüche

1. System zur Sicherung eines lokalen Computernetzwerks, umfassend ein Mittel zur Analyse eines Stroms, das auf dem lokalen Computernetzwerk eingerichtet ist, und ein Mittel zum Befehlen einer Maßnahme, die im Fall einer Erkennung eines Eindringens vorgenommen werden soll, umfassend das Senden einer Nachricht bezüglich des erkannten Eindringens an einen Administrator, und zum Blockieren, Einschränken und/oder Umleiten des Netzwerkverkehrs, **dadurch gekennzeichnet, dass** es umfasst:
- ein Überwachungsmodul (10),
- einen Analyseserver (20), der über das Internetnetzwerk mit einer Vielzahl von Überwachungsmodulen, umfassend das Überwachungsmodul (10), kommuniziert, und
- eine Anwendung, die auf einem Endgerät (30) ausgeführt wird, das aus einem Mobiltelefon oder einem Tablet (30) besteht, die mit dem Überwachungsmodul (10) und dem Server (20) über das Internetnetzwerk kommuniziert,
- wobei das Überwachungsmodul (10) und das Endgerät (30), die dem lokalen Netzwerk zugeordnet sind, gepaart sind,
- wobei das Überwachungsmodul (10) auf dem zu überwachenden lokalen Netzwerk installiert ist und eine Softwareanwendung ausführt, zum:
▪ Extrahieren digitaler Daten aus Datenpaketen, die in dem lokalen Netzwerk in Umlauf sind,
▪ Durchführen einer Vorverarbeitung und
▪ Übertragen von zeitgestempelten Metadaten an einen Server, die die digitalen Daten einer Kennung einer betroffenen überwachten Vorrichtung unter den überwachten Vorrichtungen in dem lokalen Netzwerk zuordnen,
- wobei der Server (20) die Analyse der von dem Überwachungsmodul (10) übertragenen Metadaten durchführt und eine Softwareanwendung zur Analyse der Metadaten und zur Aktivierung von Warnungen ausführt,
- die mobile Anwendung von der mobilen Computereinrichtung (30) einer oder mehrerer Personen ausgeführt wird, die berechtigt sind, die Überwachung des lokalen Netzwerks zu gewährleisten, zum:
- Kommunizieren mit dem Server (20) und dem Überwachungsmodul (10), um die Warnungen zu empfangen,
- Anbieten von Mitteln zur Deaktivierung bestimmter in dem lokalen Netzwerk installierter Computerressourcen,
- wobei die Mittel zur Deaktivierung aus dem Senden einer Nachricht, die die Änderung der Tabelle IP TABLE befiehlt, an eine der überwachten Vorrichtungen bestehen, wobei die überwachte Vorrichtung einen nichtflüchtigen Speicher zum Aufzeichnen des Zustands der Tabelle IP TABLE beim Starten der Vorrichtung aufweist.

2. Verfahren zur Sicherung eines lokalen Computernetzwerks, umfassend ein Sicherheitssystem nach Anspruch 1, **dadurch gekennzeichnet, dass** es aufweist:
- einen anfänglichen Schritt zur Paarung eines Überwachungsmoduls (10) mit einem mobilen Endgerät (30) und zur Konfiguration und des Überwachungsmoduls (10), der darin besteht, das Überwachungsmodul (10) in das lokale Netzwerk zu integrieren, eine anfängliche IpTables-Konfiguration zu speichern und einen Scan des lokalen Netzwerks auszulösen,
- einen Schritt zur permanenten oder periodischen Erfassung von Daten, die vorübergehend in einem lokalen Pufferspeicher des Überwachungsmoduls (10) aufgezeichnet sind und an einen Analyseserver (20) übertragen werden, der über das Internetnetzwerk mit einer Vielzahl von Analysemodulen (10) kommuniziert, wobei die Daten in Form von zeitgestempelten Metadaten vorliegen, die den identifizierten Frames während eines durch einen Marker identifizierten Zeitintervalls und der zugeordneten Einrichtung entsprechen, die ebenfalls durch einen Marker identifiziert ist,
- einen Schritt der Verarbeitung durch den Analyseserver (20), um Warnungen zu erzeugen,
- und im Fall der Erkennung einer die Sicherheit beeinträchtigenden Bedrohung durch den Server (20), die Übertragung einer Nachricht an das Überwachungsmodul (10) und die zugeordnete mobile Einrichtung (30), die die Art der Bedrohung und die betroffene überwachte Vorrichtung angibt, sowie einer textgestützten Empfehlung bezüglich der einzuleitenden Maßnahmen, wobei die einzuleitende Maßnahme darin besteht, für die überwachte Vorrichtung, die der von dem Analyseserver (20) gesendeten Nachricht zugeordnet ist, die Tabelle IP TABLE zu ändern.

3. Verfahren zur Sicherung eines lokalen Computernetzwerks nach Anspruch 2, **dadurch gekennzeichnet, dass** es außerdem Schritte aufweist, in denen der Analyseserver (20) eine neue Nachricht, die einen Link aufweist, sendet, dessen Aktivierung eine Funktion vom Typ "iptables- restore" befiehlt, die es ermöglichen, die anfänglich gespeicherte IpTables-Konfiguration wiederherzustellen.

4. Verfahren zur Sicherung eines lokalen Computernetzwerks nach Anspruch 2, **dadurch gekennzeichnet, dass** das Überwachungsmodul (10) in Echtzeit die Ausführung einer Netzwerkanalyse befiehlt und Informationen über die Besuche der verschiedenen überwachten Vorrichtungen abruft.

5. Verfahren zur Sicherung eines lokalen Computernetzwerks nach Anspruch 2, **dadurch gekennzeichnet, dass** der Rechner des Überwachungsmoduls (10) Programme ausführt, die drei Typen von Verarbeitungen entsprechen:
A) einem Netzwerkverbindungstest und Tests der Bandbreite und der verfügbaren, maximalen und auf dem Überwachungsmodul (10) verbleibenden Flussraten,
B) einem Netzwerk-Scan, der darin besteht, die Liste der Peripheriegeräte und Informationen über diese abzurufen, um über eine Wiedergabe der Netzwerkstruktur zu verfügen, die an den Server (20) übertragen wird, um die Eindringanalysen durchzuführen und die Überwachungsinformationen an die mobilen Endgeräte (30) zu liefern,
C) einem Abruf von Protokollen und Informationen über die verschiedenen überwachten Vorrichtungen und insbesondere die verschiedenen besuchten Websites und Übertragung dieser Informationen an den Server (20).

6. Server zur Sicherung eines lokalen Computernetzwerks für ein System nach Anspruch 1, **dadurch gekennzeichnet, dass** er Mittel zur Analyse der Metadaten umfasst, die von einer Vielzahl von Überwachungsmodulen (10) übertragen werden, die jeweils in einem lokalen Netzwerk installiert sind, wobei der Server (20) von einem Computercode Befehle erhält, der die Analyse der Metadaten und im Fall der Erkennung einer die Sicherheit beeinträchtigenden Bedrohung befiehlt, eine Nachricht an das Überwachungsmodul (10) und die zugeordneten mobilen Einrichtungen (30), die die Art der Bedrohung und die betroffene überwachte Vorrichtung angibt, sowie eine textgestützte Empfehlung bezüglich der einzuleitenden Maßnahmen zu übertragen, wobei eine der einzuleitenden Maßnahmen darin besteht, für die überwachte Vorrichtung, die der von dem Analyseserver (20) gesendeten Nachricht zugeordnet ist, die Tabelle IP TABLE zu ändern.

7. Überwachungsmodul (10) für ein System nach Anspruch 1,
**dadurch gekennzeichnet, dass** es ein Mittel zur Kommunikation mit einem entfernten Analyseserver (20) umfasst, der über das Internetnetzwerk mit einer Vielzahl von Analysemodulen (10) kommuniziert, wobei das Überwachungsmodul (10) geeignet ist, mit einem Endgerät (30) gepaart zu werden und, wenn es in einem lokalen Netzwerk installiert ist, eine Softwareanwendung auszuführen, zum:
▪ Aufzeichnen des Status der Tabelle IP TABLE in einem nichtflüchtigen Speicher beim Start einer überwachten Vorrichtung,
▪ Extrahieren digitaler Daten aus Datenpaketen, die in dem lokalen Netzwerk in Umlauf sind,
▪ Übertragen von zeitgestempelten Metadaten an einen Server, die die digitalen Daten einer Kennung der betroffenen überwachten Vorrichtung in dem lokalen Netzwerk zuordnen,
▪ Anwenden eines Deaktivierungsbefehls als Antwort auf eine Nachricht, die die Änderung der IP TABLE befiehlt.

8. Überwachungsmodul nach Anspruch 7, **dadurch gekennzeichnet, dass** das Überwachungsmodul (10) außerdem Mittel zur Anzeige der von einem Server kommenden Informationen und Mittel zur spezifischen Deaktivierung der einer Unstimmmigkeit zugeordneten überwachten Vorrichtung für die Gesamtheit seiner Kommunikationsportale aufweist.

9. Überwachungsmodul nach Anspruch 7, **dadurch gekennzeichnet, dass** es außerdem eine weitere Eingangs-Ausgangs-Schnittstelle vom Typ Radiofrequenz aufweist.

10. Überwachungsmodul nach Anspruch 7, **dadurch gekennzeichnet, dass** das Modul außerdem ein Mittel zur Anzeige von Informationen über den Funktionszustand des Netzwerks und der Kommunikation aufweist.

11. Überwachungsmodul nach Anspruch 7, **dadurch gekennzeichnet, dass** es Mittel zur Aktivierung oder Deaktivierung eines im lokalen Netzwerk vorhandenen Peripheriegeräts durch eine Maßnahme mit einem Link aufweist, der von dem Server berechnet und auf der Anzeige des Moduls oder einer zugeordneten mobilen Einrichtung dargestellt wird.

## Claims

1. A system for securing a local computer network, comprising flow analysis means implemented on said local computer network and means for controlling an action to be taken in the event of intrusion detection, comprising sending a message concerning the detected intrusion to an administrator, and for blocking, restricting and/or diverting network traffic, **characterized in that** it comprises:
- a supervision box (10),
- an analysis server (20) communicating via the Internet with a plurality of supervision boxes including said supervision box (10), and
- an application running on a terminal (30) consisting of a cell phone or tablet (30) communicating with the supervision box (10) and the server (20) via the Internet,
- said supervision box (10) and said terminal (30) associated with said local network being paired
- said supervision box (10) being installed on the local network to be supervised and running a software application for:
▪ extracting digital data from data packets circulating on said local network,
▪ pre-processing and
▪ transmitting to a server time-stamped metadata associating the digital data with an identifier of a relevant supervised device among the supervised devices on the local network,
- said server (20) analyzing the metadata transmitted by said supervision box (10) and running a software application for metadata analysis and alert activation
- said mobile application executed by said mobile computing equipment (30) of one or more persons authorized to supervise the local network, for:
- communicating with said server (20) and with the supervision box (10) in order to receive said alerts
- providing means of deactivating certain computer resources installed on said local network,
- said deactivation means being constituted by the sending to one of said supervised devices of a message ordering the modification of the IP TABLE, said supervised device comprising a non-volatile memory for recording the state of the IP TABLE when the device is started up.

2. The method of securing a local computer network comprising a security system according to claim 1, **characterized in that** it comprises:
- an initial step of pairing a supervision box (10) with a mobile terminal (30) and of configuring and of said supervision box (10), consisting of integrating the supervision box (10) into the local network, saving an initial IpTables configuration and launching a scan of said local network
- a step of permanently or periodically capturing data which are transiently stored in a local buffer memory of the supervisor box (10) and transmitted to an analysis server (20) communicating via the Internet with a plurality of analysis boxes (10), said data being in the form of time-stamped metadata, corresponding to the frames identified during a time interval identified by a marker, and to the associated equipment also identified by a marker
- a processing step by said analysis server (20) to generate alerts
- and in the event of detection by said server (20) of a threat affecting security, transmitting to the supervision box (10) and associated mobile equipment (30) of a message indicating the nature of the threat and the supervised device concerned, together with a textual recommendation concerning the actions to be taken, said action to be taken consisting in modifying, for the supervised device associated with the message sent by said analysis server (20), the IP TABLE.

3. The method of securing a local computer network according to claim 2, **characterized in that** it further comprises steps of transmitting by said analysis server (20) of a new message comprising a link, the activation of which controls a function of the "iptables-restore" type, enabling said initially saved IpTables configuration to be restored.

4. The method for securing a local computer network according to claim 2, **characterized in that** said supervision box (10) controls the execution of a network analysis in real time and recovers information on visits to the various supervised devices

5. The method of securing a local computer network according to claim 2, **characterized in that** the computer of said supervision box (10) runs programs corresponding to three types of processing:
A) a network connection test, and tests on available, maximum, and remaining bandwidths on the supervision box (10)
B) A network scan, consisting in retrieving the list of peripherals and information about them to obtain a representation of the network structure which is transmitted to said server (20) in order to carry out intrusion analyses and supply supervision information to the mobile terminals (30)
C) Retrieving logs and information on the various devices being monitored, and in particular the various sites visited, and transmitting this information to the server (20).

6. A server for securing a local computer network for a system in accordance with claim 1, **characterized in that** it comprises means for analyzing metadata transmitted by a plurality of supervision boxes (10) each installed on a local network, said server (20) being controlled by a computer code controlling the analysis of said metadata and, in the event of detection of a threat affecting security, transmitting to the supervision box (10) and associated mobile equipment (30) a message indicating the nature of the threat and the supervised device concerned, together with a textual recommendation concerning the actions to be taken, one of said actions to be taken consisting in modifying, for the supervised device associated with the message sent by said analysis server (20), the IP TABLE.

7. A supervision box (10) for a system according to claim 1,
**characterized in that** it comprises a means of communicating with a remote analysis server (20) communicating via the Internet network with a plurality of analysis boxes (10), said supervision box (10) being capable of pairing with a terminal (30) and running, when installed on a local network, a software application for:
▪ Storing IP TABLE status in non-volatile memory when a supervised device starts up
▪ extracting digital data from data packets circulating on said local network,
▪ transmitting to a server time-stamped metadata associating the digital data with an identifier of the supervised device concerned on the local network,
▪ applying a deactivation command in response to a message controlling modification of the IP TABLE.

8. The supervision box, according to claim 7, **characterized in that** said supervision box (10) further comprises means for displaying information from a server and means for specifically deactivating the supervised device associated with a discrepancy, for all of its communication ports.

9. The supervision box, according to claim 7, **characterized in that** it further comprises another input-output interface of the radio-frequency type.

10. The supervision box, according to claim 7, **characterized in that** said box further comprises means for displaying information on the functional status of the network and communications.

11. The supervision box, according to claim 7, **characterized in that** it comprises means for activating or deactivating a peripheral present on the local network by an action on a link calculated by the server and shown on the display of said box or of associated mobile equipment.
